# EUROPÄISCHE PATENTANMELDUNG

(11) **EP 4 280 324 A2**
(43) Veröffentlichungstag der Anmeldung: **22.11.2023**
(21) Anmeldenummer: 23169100.7
(22) Anmeldetag: 21.04.2023
(51) Int. Cl.: H01M 8/04291, H01M 8/04119

(54) **BRENNSTOFFZELLEN-ABGASANLAGE**

(30) Priorität: 20.05.2022 DE 102022112681
(71) Anmelder: Purem GmbH, 66539 Neunkirchen (DE)
(72) Erfinder: Hammer, Jochen, Stuttgart (DE); Birgler, Markus, Wernau (DE); Schaller, Patrick, Bopfingen (DE); Wink, Peter, Göppingen (DE); Wacker, Andreas, Plochingen (DE)
(74) Vertreter: Ruttensperger Lachnit Trossin Gomoll

(57) **Zusammenfassung**

Eine Brennstoffzellen-Abgasanlage für ein Brennstoffzellensystem, insbesondere in einem Fahrzeug, umfasst eine von Brennstoffzellen-Abgas durchströmbare Brennstoffzellen-Abgasleitung und eine von dem Brennstoffzellen-Abgas durchströmbare Schalldämpfereinheit (14), wobei die Schalldämpfereinheit (14) umfasst ein Schalldämpfergehäuse (20) mit einem Brennstoffzellen-Abgaseintrittsbereich und einem Brennstoffzellen-Abgasaustrittsbereich, wobei ein stromaufwärtiger Leitungsabschnitt (16) der Brennstoffzellen-Abgasleitung an den Brennstoffzellen-Abgaseintrittsbereich anschließt und ein stromabwärtiger Leitungsabschnitt (24) der Brennstoffzellen-Abgasleitung an den Brennstoffzellen-Abgasaustrittsbereich anschließt, wenigstens eine in dem Schalldämpfergehäuse gebildete Schalldämpferkammer (36, 38), wenigstens eine durch einen Gehäuseboden (72) des Schalldämpfergehäuses (20) von wenigstens einer Schalldämpferkammer (36, 38) getrennte Flüssigkeitssammelkammer (70), wobei in dem Gehäuseboden (72) wenigstens eine wenigstens eine Schalldämpferkammer (36, 38) mit wenigstens einer Flüssigkeitssammelkammer (70) zum Flüssigkeitsaustausch verbindende Flüssigkeitsdurchtrittsöffnung (74, 76) vorgesehen ist, und wobei an dem Schalldämpfergehäuse (20) wenigstens eine Flüssigkeitsableitöffnung (80) zum Ableiten von Flüssigkeit aus der wenigstens einen Flüssigkeitssammelkammer (70) vorgesehen ist.

## Beschreibung

Die vorliegende Erfindung betrifft eine Brennstoffzellen-Abgasanlage, über welche das aus einer Brennstoffzelle abgegebene Prozessgas als Brennstoffzellen-Abgas zur Umgebung abgegeben werden kann.

Um insbesondere bei elektromotorisch betriebenen Fahrzeugen die Energie zum Betreiben der Fahr-Elektromotoren und auch der sonstigen Verbraucher elektrischer Energie in derartigen Fahrzeugen bereitstellen zu können, ist es bekannt, Brennstoffzellen einzusetzen. Im Betrieb einer derartigen Brennstoffzelle wird einem Anodenbereich Wasserstoff bzw. ein stark mit Wasserstoff angereichertes Anodengas zugeführt. Einem Kathodenbereich wird Sauerstoff bzw. sauerstoffhaltige Luft als Kathodengas zugeführt. Unter Umsetzung von Wasserstoff und Sauerstoff zu Wasser wird elektrischer Strom erzeugt. Das wasserstoffentreicherte Anodenabgas und das mit Wasser angereicherte Kathodenabgas verlassen die Brennstoffzelle als Brennstoffzellen-Abgas bzw. Prozessgas. Im Brennstoffzellenbetrieb wird zumindest das Kathodenabgas zur Umgebung abgegeben. In verschiedenen Betriebsphasen, wie zum Beispiel beim Spülen insbesondere des Anodenbereichs vor Beginn des Brennstoffzellenbetriebs, kann auch das Anodenabgas bzw. das in einer derartigen Betriebsphase durch den Anodenbereich geleitete Gas zur Umgebung abgegeben werden.

Es ist die Aufgabe der vorliegenden Erfindung, eine Brennstoffzellen-Abgasanlage für ein Brennstoffzellensystem, insbesondere in einem Fahrzeug, vorzusehen, mit welcher unter Dämpfung von im Brennstoffzellenbetrieb entstehenden Geräuschen in dem Brennstoffzellen-Abgas mitgeführte Flüssigkeit, insbesondere Wasser, aus dem Brennstoffzellen-Abgas extrahiert werden kann.

Erfindungsgemäß wird diese Aufgabe gelöst durch eine Brennstoffzellen-Abgasanlage für ein Brennstoffzellensystem, insbesondere in einem Fahrzeug, umfassend eine von Brennstoffzellen-Abgas durchströmbare Brennstoffzellen-Abgasleitung und eine von dem Brennstoffzellen-Abgas durchströmbare Schalldämpfereinheit, wobei die Schalldämpfereinheit umfasst:
- ein Schalldämpfergehäuse mit einem Brennstoffzellen-Abgaseintrittsbereich und einem Brennstoffzellen-Abgasaustrittsbereich, wobei ein stromaufwärtiger Leitungsabschnitt der Brennstoffzellen-Abgasleitung an den Brennstoffzellen-Abgaseintrittsbereich anschließt und ein stromabwärtiger Leitungsabschnitt der Brennstoffzellen-Abgasleitung an den Brennstoffzellen-Abgasaustrittsbereich anschließt,
- wenigstens eine in dem Schalldämpfergehäuse gebildete Schalldämpferkammer,
- wenigstens eine durch einen Gehäuseboden des Schalldämpfergehäuses von wenigstens einer Schalldämpferkammer getrennte Flüssigkeitssammelkammer, wobei in dem Gehäuseboden wenigstens eine wenigstens eine Schalldämpferkammer mit wenigstens einer Flüssigkeitssammelkammer zum Flüssigkeitsaustausch verbindende Flüssigkeitsdurchtrittsöffnung vorgesehen ist, und wobei an dem Schalldämpfergehäuse wenigstens eine Flüssigkeitsableitöffnung zum Ableiten von Flüssigkeit aus der wenigstens einen Flüssigkeitssammelkammer vorgesehen ist.

Die in der erfindungsgemäß aufgebauten Brennstoffzellen-Abgasanlage eingesetzte Schalldämpfereinheit verbindet die Funktion zum Dämpfen von im Betrieb eines Brennstoffzellensystems insbesondere durch die verschiedenen Gasströme fördernde Luftverdichter, wie zum Beispiel Kompressoren, generierten Geräuschen mit dem Extrahieren von im Brennstoffzellen-Abgas enthaltener Flüssigkeit, insbesondere Wasser. Es ist somit gewährleistet, dass einerseits im Betrieb eines Brennstoffzellensystems entstehende Geräusche in der Umgebung eines Fahrzeugs im Wesentlichen nicht oder nur stark gedämpft wahrgenommen werden können, während gleichzeitig das Ausstoßen eines stark mit heißem Wasser bzw. Wasserdampf angereicherten Stroms von Brennstoffzellen-Abgas verhindert wird. Das im Bereich der Schalldämpfereinheit dem Brennstoffzellen-Abgas entzogene Wasser kann bei Bedarf in den Arbeitskreislauf eines Brennstoffzellensystems zurückgespeist werden, oder kann in flüssiger Form zur Umgebung abgegeben werden.

Für eine effiziente Schalldämpfung kann in dem Schalldämpfergehäuse eine Mehrzahl von jeweils durch eine Trennwand voneinander getrennten Schalldämpferkammern ausgebildet sein. Dabei kann jede Schalldämpferkammer durch den Gehäuseboden von der wenigstens einen Flüssigkeitssammelkammer getrennt sein, so dass aus jeder Schalldämpferkammer darin sich ansammelnde Flüssigkeit abgegeben werden kann.

Für eine gleichmäßige Abgabe von Flüssigkeit aus allen Schalldämpferkammern kann in dem Gehäuseboden in Zuordnung zu jeder Schalldämpferkammer wenigstens eine Flüssigkeitsdurchtrittsöffnung vorgesehen sein.

Um den Brennstoffzellen-Abgasstrom definiert durch das Schalldämpfergehäuse bzw. die darin gebildeten Schalldämpferkammern zu leiten, wird vorgeschlagen, dass in dem Schalldämpfergehäuse wenigstens ein in wenigstens einer Schalldämpferkammer sich erstreckendes Brennstoffzellen-Abgasrohr vorgesehen ist, wobei wenigstens ein Brennstoffzellen-Abgasrohr zu wenigstens einer Schalldämpferkammer über wenigstens eine, vorzugsweise eine Mehrzahl von beispielsweise in einer Rohrwandung ausgebildeten Öffnungen offen ist. Beispielsweise könnte auch vorgesehen sein, dass zumindest eine Schalldämpferkammer in Verbindung mit einer in einem Brennstoffzellen-Abgasrohr ausgebildeten Öffnung eine Resonatorkammer eines Helmholtz-Resonators bildet.

Für einen kompakten, gleichwohl einen möglichst geringen Strömungswiderstand einführenden Aufbau kann vorgesehen sein, dass das Schalldämpfergehäuse in Richtung einer Schalldämpfergehäuse-Längsachse langgestreckt ist, wobei der Brennstoffzellen-Abgaseintrittsbereich in einem stromaufwärtigen axialen Endbereich des Schalldämpfergehäuses ausgebildet ist und der Brennstoffzellen-Abgasaustrittsbereich in einem stromabwärtigen axialen Endbereich des Schalldämpfergehäuses ausgebildet ist. Das Brennstoffzellen-Abgas kann somit die Schalldämpfereinheit im Wesentlichen geradlinig ohne wesentliche Strömungsumlenkungen durchströmen.

Dabei kann der Brennstoffzellen-Abgaseintrittsbereich zu einer stromaufwärtigen Schalldämpferkammer offen sein, und der Brennstoffzellen-Abgasaustrittsbereich kann zu einer stromabwärtigen Schalldämpferkammer offen sein, wobei die stromaufwärtige Schalldämpferkammer durch wenigstens eine Trennwand oder/und wenigstens eine weitere Schalldämpferkammer von der stromabwärtigen Schalldämpferkammer getrennt ist.

Um den Effekt zum Abscheiden von Flüssigkeit aus dem Brennstoffzellen-Abgas zu verstärken, wird vorgeschlagen, dass in dem Schalldämpfergehäuse eine Flüssigkeitsabscheidekammer ausgebildet ist, wobei der stromaufwärtige Leitungsabschnitt der Brennstoffzellen-Abgasleitung zu der Flüssigkeitsabscheidekammer offen ist und die Flüssigkeitsabscheidekammer durch eine Trennwand von einer Schalldämpferkammer getrennt ist. Die Flüssigkeitsabscheidekammer kann durch den Gehäuseboden von der wenigstens einen Flüssigkeitssammelkammer getrennt sein, wobei in dem Gehäuseboden wenigstens eine die Flüssigkeitsabscheidekammer mit wenigstens einer Flüssigkeitssammelkammer zum Flüssigkeitsaustausch verbindende Flüssigkeitsdurchtrittsöffnung vorgesehen ist.

Zum Abschneiden von Flüssigkeit aus dem Brennstoffzellen-Abgas im Bereich der Flüssigkeitsabscheidekammer kann ein in der Flüssigkeitsabscheidekammer sich erstreckender Abscheideleitungsabschnitt mit einem stromaufwärtigen Abscheideleitungsteil im Brennstoffzellen-Abgaseintrittsbereich an den stromaufwärtigen Leitungsabschnitt der Brennstoffzellen-Abgasleitung anschließen und mit einem stromabwärtigen Abscheideleitungsteil die die Flüssigkeitsabscheidekammer von einer Schalldämpferkammer trennende Trennwand durchsetzen oder/und zu wenigstens einer Schalldämpferkammer offen sein. Im Angrenzungsbereich des stromabwärtigen Abscheideleitungsteils an den stromaufwärtigen Abscheideleitungsteil kann ein Öffnungsbereich mit einer zu der Flüssigkeitsabscheidekammer offenen, vorzugsweise im Wesentlichen ringartigen Flüssigkeitsabscheideöffnung ausgebildet sein.

In diesem Öffnungsbereich kann ein stromaufwärtiger Endabschnitt des stromabwärtigen Abscheideleitungsteils in einen stromabwärtigen Endabschnitt des stromaufwärtigen Abscheideleitungsteils derart eingreifend positioniert sein, dass zwischen dem stromaufwärtigen Endabschnitt des stromabwärtigen Abscheideleitungsteils und dem stromabwärtigen Endabschnitt des stromaufwärtigen Abscheideleitungsteils die Flüssigkeitsabscheideöffnung gebildet ist. Hierzu kann beispielsweise der stromabwärtige Endabschnitt des stromaufwärtigen Abscheideleitungsteils in einer Abgas-Hauptströmungsrichtung sich vorzugsweise im Wesentlichen konisch erweiternd ausgebildet sein, oder/und kann der stromaufwärtige Endabschnitt des stromabwärtigen Abscheideleitungsteils in der Abgas-Hauptströmungsrichtung sich vorzugsweise im Wesentlichen konisch erweiternd ausgebildet sein.

Um bei dieser Ausgestaltung des Abscheideleitungsabschnitts dafür zu sorgen, dass im bezüglich einer Strömungsmittenachse radial äußeren Bereich des Brennstoffzellen-Abgasstroms eine vergleichsweise hohe Konzentration von Flüssigkeit angesammelt wird und der mit Flüssig angereicherte radial äußere Teil des Brennstoffzellen-Abgasstroms dann durch die Flüssigkeitsabscheideöffnung in die Flüssigkeitsabscheidekammer abgeleitet werden kann, wird vorgeschlagen, dass stromaufwärts der Flüssigkeitsabscheideöffnung eine Drallstrom-Erzeugungseinheit vorgesehen ist. Derartige Drallstrom-Erzeugungseinheiten werden beispielsweise in Abgasanlagen von Diesel-Brennkraftmaschinen eingesetzt, um in einem Bereich stromaufwärts einer SCR-Katalysatoreinheit eine Verwirbelung im Abgasstrom und somit eine verbesserte Durchmischung von Abgas mit in dieses eingespritztem Reduktionsmittel zu erzeugen.

Eine derartige Drallstrom-Erzeugungseinheit kann eine Mehrzahl von bezüglich einer Strömungsmittenachse in Umfangsrichtung aufeinanderfolgenden, bezüglich der Abgas-Hauptströmungsrichtung angestellten Strömungsablenkelementen umfassen.

In Zuordnung zu der wenigstens einen Flüssigkeitssammelkammer kann beispielsweise weiter vorgesehen sein:
- ein Flüssigkeitsabgabeventil zum wahlweisen Freigegeben und Abschließen der wenigstens einen Flüssigkeitsableitöffnung,
   oder/und
- ein Flüssigkeitspegelsensor zum Bereitstellen von Information über den Flüssigkeitspegel in der wenigstens einen Flüssigkeitssammelkammer,
   oder/und
- eine Heizeinheit zum Erwärmen von in der wenigstens einen Flüssigkeitssammelkammer angesammelter Flüssigkeit,
- oder/und
- wenigstens eine Wasserstoffabgabeöffnung zur Abgabe von Wasserstoff aus der wenigstens einen Flüssigkeitssammelkammer.

Der Einsatz eines Flüssigkeitsabgabeventils ermöglicht es, in der wenigstens einen Flüssigkeitssammelkammer angesammelte Flüssigkeit dann, wenn eine ausreichende Menge vorhanden ist und wenn beispielsweise im Betrieb eines Brennstoffzellensystems die Rückspeisung von Flüssigkeit erforderlich oder vorteilhaft ist, aus der wenigstens einen Flüssigkeitssammelkammer abzuleiten und in den Arbeitsprozess zurückzuspeisen. Die Information darüber, ob ausreichend Flüssigkeit angesammelt worden ist oder bereits eine derart große Menge von Flüssigkeit angesammelt worden ist, dass zumindest ein Teil davon aus der Flüssigkeitssammelkammer abgeleitet werden muss, kann von dem Flüssigkeitspegelsensor bereitgestellt werden. Um zu gewährleisten, dass auch bei vergleichsweise niedrigen Temperaturen die in der wenigstens einen Flüssigkeitssammelkammer angesammelte Flüssigkeit abgegeben werden kann und nicht gefrorene Flüssigkeit die Abgabe blockiert, kann die beispielsweise eine Heizwendel oder dergleichen umfassende und somit elektrisch erregbare Heizeinheit betrieben werden. Da abhängig davon, welche Prozessgasströme als Brennstoffzellen-Abgas durch die Brennstoffzellen-Abgasanlage geleitet werden, dass Brennstoffzellen-Abgas auch Wasserstoff enthalten kann, wird zum Vermeiden des Entstehens einer kritischen Wasserstoffkonzentration in der wenigstens einen Flüssigkeitssammelkammer vermittels der wenigstens einen Wasserstoffabgabeöffnung die Möglichkeit geschaffen, Wasserstoff im Wesentlichen kontinuierlich zur Umgebung abzugeben.

Im stromabwärtigen Leitungsabschnitt der Brennstoffzellen-Abgasleitung kann ein Wasserstoffsensor zum Bereitstellen von Information über den Wasserstoffgehalt in dem Brennstoffzellen-Abgas vorgesehen sein. Wird erkannt, dass die Konzentration von Wasserstoff in dem durch den stromabwärtigen Leitungsabschnitt strömenden Brennstoffzellen-Abgas zu hoch ist, kann dem Brennstoffzellen-Abgas beispielsweise ein erhöhter Luftanteil beigemengt werden, um die Wasserstoffkonzentration zu mindern. Weiter kann im stromaufwärtigen Leitungsabschnitt ein Gasstrom-Regulierventil angeordnet sein. Ein derartiges Gasstrom-Regulierventil ermöglicht es, den Strömungswiderstand in der Brennstoffzellen-Abgasanlage definiert einzustellen, so dass die Funktion eines Druckhalteventils zum Beibehalten bzw. Einstellen des für den Betrieb eines Brennstoffzellensystems erforderlichen Gegendrucks erfüllt werden kann. Ferner kann ein derartiges Gasstrom-Regulierventil auch dazu ausgebildet sein, definiert verschiedene Gasströme in die Brennstoffzellen-Abgasanlage einzuleiten, um beispielsweise das Kathodenabgas oder/und das Anodenabgas einer Brennstoffzelle oder, sofern erforderlich, einen zum Mindern der Wasserstoffkonzentration erforderlichen zusätzlichen Luftanteil in die Brennstoffzellen-Abgasanlage einzuleiten.

Um das Auskondensieren von im Brennstoffzellen-Abgas enthaltener Flüssigkeit zu unterstützen, kann im stromaufwärtigen Leitungsabschnitt der Brennstoffzellen-Abgasleitung eine Kondensatoreinheit angeordnet sein. In der Kondensatoreinheit kann das Kondensieren von im Brennstoffzellen-Abgas enthaltener Flüssigkeit beispielsweise durch einen Wärmetausch zwischen der Umgebungsluft, welche im Allgemeinen kälter ist als das Brennstoffzellen-Abgas, und dem Brennstoffzellen-Abgas ausgelöst werden. Auch der Einsatz einer Flüssigkeit als Kühlmedium ist möglich. Die in der Flüssigkeit aufgenommene Wärme kann beispielsweise in einem Wärmetauscher auf die in einen Fahrzeuginnenraum einzuleitende Luft übertragen werden.

Die vorliegende Erfindung wird nachfolgend mit Bezug auf die beiliegenden Figuren detailliert beschrieben. Es zeigt:
- Fig. 1: eine Seitenansicht einer Brennstoffzellen-Abgasanlage;
- Fig. 2: die Brennstoffzellen-Abgasanlage der Fig. 1 in perspektivischer Seitenansicht mit geöffnet dargestellter Schalldämpfereinheit;
- Fig. 3: eine Seitenansicht der Brennstoffzellen-Abgasanlage mit geöffnet dargestellter Schalldämpfereinheit;
- Fig. 4: eine Seitenansicht der Schalldämpfereinheit der Brennstoffzellen-Abgasanlage der Fig. 1;
- Fig. 5: eine perspektivische Seitenansicht der Schalldämpfereinheit mit geöffnet dargestelltem Schalldämpfergehäuse;
- Fig. 6: eine Seitenansicht der Schalldämpfereinheit mit geöffnet dargestelltem Schalldämpfergehäuse;
- Fig. 7: eine perspektivische Ansicht einer Drallstrom-Erzeugungseinheit;
- Fig. 8: die Drallstrom-Erzeugungseinheit der Fig. 7 in axialer Ansicht;
- Fig. 9: eine der Fig. 8 entsprechende Darstellung einer alternativen Ausgestaltung der Drallstrom-Erzeugungseinheit.

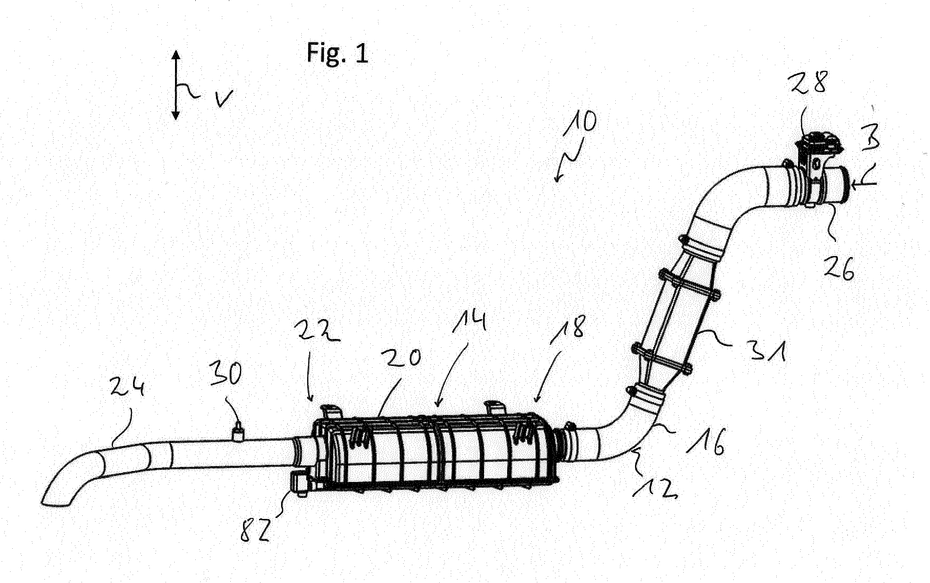

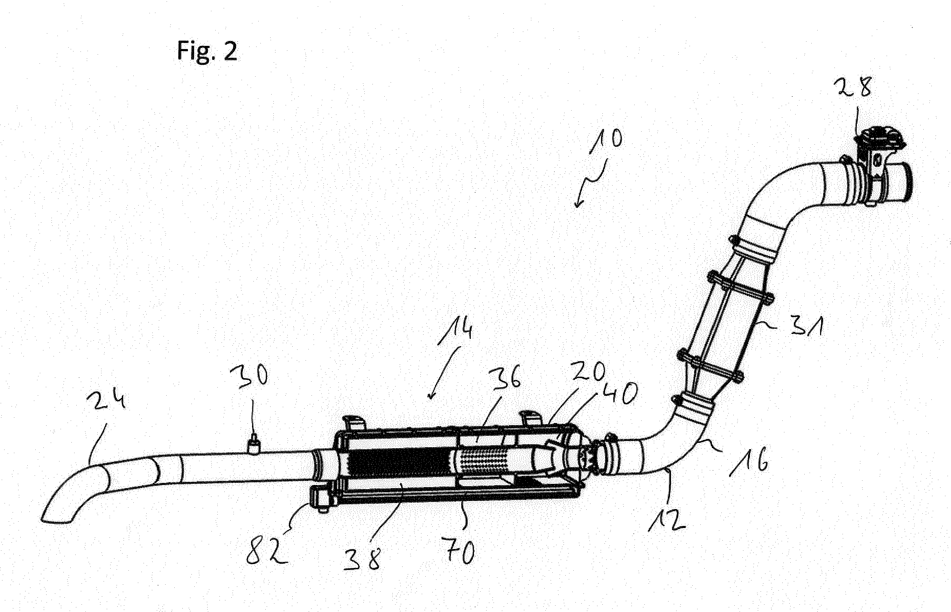

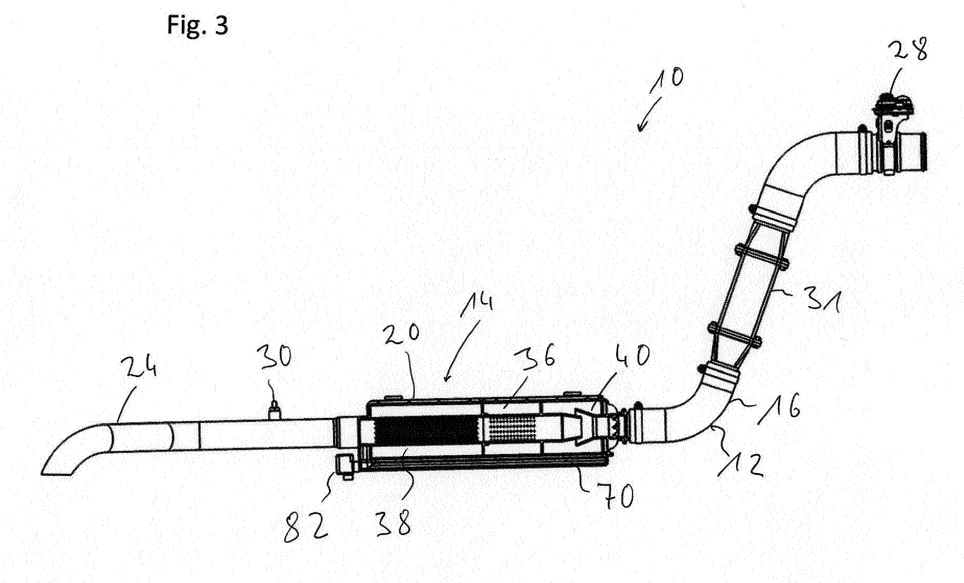

Die Fig. 1 bis 3 zeigen eine Brennstoffzellen-Abgasanlage 10, welche in Zuordnung zu einem in einem Fahrzeug zur Erzeugung elektrischer Energie eingesetztem Brennstoffzellensystem vorgesehen sein kann.

Die Brennstoffzellen-Abgasanlage 10 umfasst eine allgemein mit 12 bezeichnete und von Brennstoffzellen-Abgas B durchströmbare Brennstoffzellen-Abgasleitung 12 und eine in die Brennstoffzellen-Abgasleitung 12 integrierte Schalldämpfereinheit 14. Ein stromaufwärtiger Leitungsabschnitt 16 der Brennstoffzellen-Abgasleitung 12 schließt in einem Brennstoffzellen-Abgaseintrittsbereich 18 eines Schalldämpfergehäuses 20 an die Schalldämpfereinheit 14 an. In einem Brennstoffzellen-Abgasaustrittsbereich 22 des Schalldämpfergehäuses 20 schließt ein stromabwärtiger Leitungsabschnitt 24 der Brennstoffzellen-Abgasleitung 12 an die Schalldämpfereinheit 14 an. Beispielsweise kann über den stromabwärtigen Leitungsabschnitt 24 der Brennstoffzellen-Abgasleitung 12 das von einer oder mehreren Brennstoffzellen eines Brennstoffzellensystems abgegebene Brennstoffzellen-Abgas B zur Umgebung abgegeben werden. Ein stromaufwärtiger Endbereich 26 des stromaufwärtigen Leitungsabschnitts 16 der Brennstoffzellen-Abgasleitung 12 kann dazu ausgebildet sein, an verschiedene Brennstoffzellen-Abgas als Prozessgas abgebende Systembereiche einer oder mehrerer Brennstoffzellen bzw. Brennstoffzellenstapel angeschlossen zu werden. Beispielsweise können an dem stromaufwärtigen Endbereich der Anodenbereich oder/und der Kathodenbereich der bzw. jeder Brennstoffzelle angeschlossen werden, um definiert das den Anodenbereich verlassende Prozessgas oder/und das den Kathodenbereich verlassende Prozessgas als Brennstoffzellen-Abgas B in die Brennstoffzellen-Abgasanlage 10 einzuleiten. Ferner kann beispielsweise über einen zur Umgebung offenen Leitungsbereich Umgebungsluft in die Brennstoffzellen-Abgasanlage 10 eingeleitet werden.

Zur Einstellung des in der Brennstoffzellen-Abgasanlage 10 generierten Gegendrucks bzw. auch der in dieses eingeleiteten Gasströme kann ein Gasstrom-Regulierventil 28 beispielsweise nahe dem stromaufwärtigen Endbereich 26 des stromaufwärtigen Leitungsabschnitts 16 der Brennstoffzellen-Abgasanlage 12 angeordnet sein. Im stromabwärtigen Leitungsabschnitt 24 kann ein Wasserstoffsensor 30 vorgesehen sein, um Information über die Wasserstoffkonzentration des durch den stromabwärtigen Leitungsabschnitt 24 strömenden Brennstoffzellen-Abgasstroms bereitzustellen. Dieser kann insbesondere dann Wasserstoff enthalten, wenn am Beginn bzw. vor dem Beginn des Brennstoffzellenbetriebs der Anodenbereich gespült wird und das aus dem Anodenbereich abgeleitete Prozessgas über die Brennstoffzellen-Abgasanlage 10 zur Umgebung abgegeben wird. Deutet das von dem Wasserstoffsensor 30 generierte Signal auf eine zu hohe Wasserstoffkonzentration hin, kann dem durch die Brennstoffzellen-Abgasanlage 10 geleiteten Brennstoffzellen-Abgas B beispielsweise durch entsprechende Ansteuerung des Gasstrom-Regulierventils 28 ein Luftanteil bzw. erhöhter Luftanteil über den vorangehend angesprochenen Leitungsbereich beigemengt werden, um somit eine geringere Wasserstoffkonzentration zu erreichen.

Stromaufwärts der Schalldämpfereinheit 14 kann eine Allgemein mit 31 bezeichnete Kondensatoreinheit vorgesehen sein, welche das auskondensieren von im Brennstoffzellen-Abgas B transportierter Flüssigkeit, im Allgemeinen Wasser, unterstützt. In der Schalldämpfereinheit 14 kann, wie nachfolgend beschrieben, derartige kondensierte Flüssigkeit aus dem Brennstoffzellen-Abgas B abgezogen, gesammelt und in den Brennstoffzellenprozess rückgespeist werden.

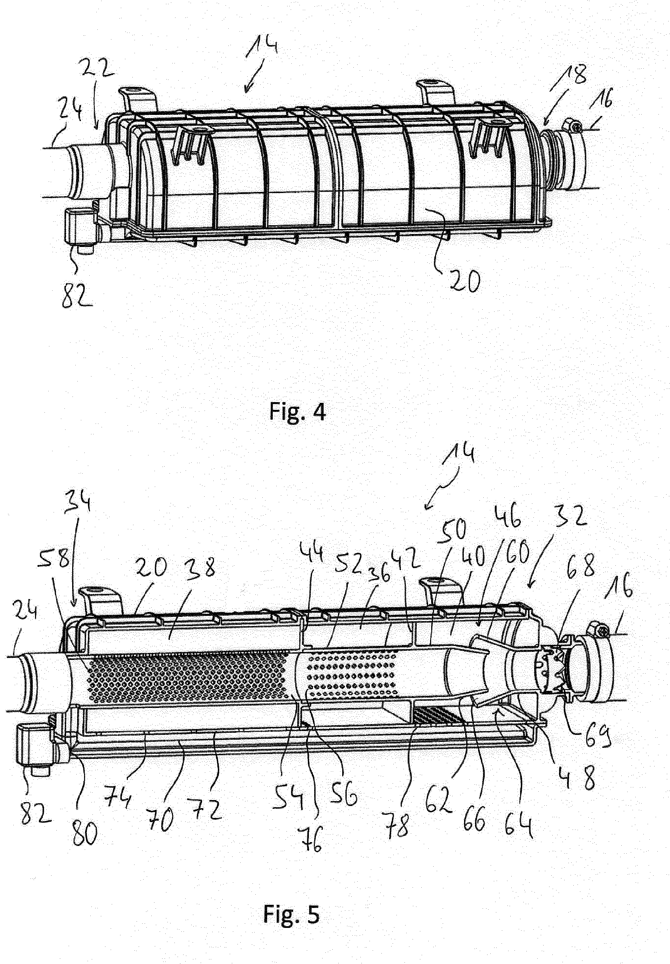

Mit Bezug auf die Fig. 4 bis 6 wird nachfolgend der Aufbau bzw. die Funktion der Schalldämpfereinheit 14 detailliert erläutert.

Das Schalldämpfergehäuse 20 ist in Richtung einer Schalldämpfergehäuse-Längsachse L langgestreckt und ist in einem stromaufwärtigen Endbereich 32 zum Anschluss des stromaufwärtigen Leitungsabschnitts 16 der Brennstoffzellen-Abgasleitung 12 ausgebildet. In einem stromabwärtigen Endbereich 34 ist das Schalldämpfergehäuse 20 zum Anschluss des stromabwärtigen Leitungsabschnitts 24 der Brennstoffzellen-Abgasleitung ausgebildet. Beispielsweise können die Leitungsabschnitte 16, 24 unter Einsatz von Rohrschellen oder dergleichen an entsprechende Stutzen des Schalldämpfergehäuses 20 angebunden werden.

Im Inneren des Schalldämpfergehäuses 20 sind zwei Schalldämpferkammern 36, 38 sowie eine Flüssigkeitsabscheidekammer 40 gebildet. Die stromaufwärtige Schalldämpferkammer 36 ist durch eine Trennwand 42 von der Flüssigkeitsabscheidekammer 40 getrennt, und die stromabwärtige Schalldämpferkammer 38 ist durch eine Trennwand 44 von der stromaufwärtigen Schalldämpferkammer 36 getrennt. Der stromabwärtige Leitungsabschnitt 24 der Brennstoffzellen-Abgasleitung 12 ist zur stromabwärtigen Schalldämpferkammer 38 offen. Über einen in der Flüssigkeitsabscheidekammer 40 angeordneten Abscheideleitungsabschnitt 46 ist der stromaufwärtige Leitungsabschnitt 16 der Brennstoffzellen-Abgasleitung 12 zu den beiden Schalldämpferkammern 36, 38 offen.

Der Abscheideleitungsabschnitt 46 umfasst einen im stromaufwärtigen Endbereich 32 des Schalldämpfergehäuses 20 an den stromaufwärtigen Leitungsabschnitt 16 der Brennstoffzellen-Abgasleitung 12 anschließenden, rohrartigen stromaufwärtigen Abscheideleitungsteil 48 sowie einen an die Trennwand 42 anschließenden bzw. diese durchsetzenden stromabwärtigen Abscheideleitungsteil 50. Der stromabwärtige Abscheideleitungsteil 50 des Abscheideleitungsabschnitts 46 kann an ein im Inneren des Schalldämpfergehäuses 12 sich erstreckendes ein- oder mehrstückig ausgebildetes Brennstoffzellen-Abgasrohr 52 anschließen bzw. mit diesem einstückig ausgebildet sein. Über eine Mehrzahl von in einer Rohrwandung 54 des Brennstoffzellen-Abgasrohrs 52 ausgebildeten Öffnungen 56 ist dieses zur stromaufwärtigen Schalldämpferkammer 36 offen. Über eine Mehrzahl von in der Rohrwandung 54 ausgebildeten Öffnungen 58 ist das Brennstoffzellen-Abgasrohr 52 zur stromabwärtigen Schalldämpferkammer 38 offen. Das Brennstoffzellen-Abgasrohr 52 erstreckt sich durch die die beiden Schalldämpferkammern 36, 38 voneinander trennende Trennwandung 44 hindurch bzw. kann zumindest teilweise mit dieser einstückig ausgebildet sein und schließt in dem stromabwärtigen Endbereich 34 des Schalldämpfergehäuses 20 an den stromabwärtigen Leitungsabschnitt 24 der Brennstoffzellen-Abgasleitung 12 an.

Man erkennt bei dieser Struktur, dass das durch die Schalldämpfereinheit 14 geleitete Brennstoffzellen-Abgas B das Schalldämpfergehäuse 20 im Wesentlichen ohne Strömungsablenkung geradlinig entlang der Schalldämpfergehäuse-Längsachse L durchströmen kann, so dass durch die Schalldämpfereinheit 14 keine wesentlichen Strömungswiderstände generiert werden. Gleichwohl besteht die Möglichkeit, durch die Kommunikation mit den verschiedenen Schalldämpferkammern 36, 38 durch Reflexion und Absorption Schall zu dämpfen. Hierzu kann beispielsweise in einer oder in beiden Schalldämpferkammern 36, 38 zusätzlich schalldämpfendes Material, wie z. B. poröses faserartiges oder geschäumtes Material, angeordnet sein. Es ist darauf hinzuweisen, dass auch mehr als zwei aufeinander folgende Schalldämpferkammern vorgesehen sein können oder dass im Innenraum des Schalldämpfergehäuses 20 auch nur eine einzige derartige Schalldämpferkammer vorgesehen sein kann. Ferner kann zumindest eine der Schalldämpferkammern als Resonatorkammer eines Helmholtz-Resonators wirken, und es können verschiedene der Schalldämpferkammern über zusätzliche Brennstoffzellen-Abgasrohre miteinander kommunizieren.

Der stromaufwärtige Abscheideleitungsteil weist einen stromabwärtigen Endabschnitt 60 auf, welcher in Richtung einer Abgas-Hauptströmungsrichtung H entlang einer Strömungsmittenachse S sich beispielsweise im Wesentlichen konisch erweiternd ausgebildet ist. Gleichermaßen weist der stromabwärtige Abscheideleitungsteil einen stromaufwärtigen Endabschnitt 62 auf, der in der Abgas-Hauptströmungsrichtung H in diesem Bereich sich beispielsweise konisch erweiternd ausgebildet ist und in den stromabwärtigen Endabschnitt 60 des stromaufwärtigen Abscheideleitungsteils 48 eingreifend positioniert ist. Zwischen den in der Abgas-Hauptströmungsrichtung H entlang der Strömungsmittenachse S sich radial erweiternden Endabschnitten 60, 62 ist in einem Öffnungsbereich 64 des Abscheideleitungsabschnitts 46 eine im Wesentlichen ringartige Flüssigkeitsabscheideöffnung 66 gebildet.

Stromaufwärts des Öffnungsbereichs 64 ist beispielsweise in dem mit einem eine stromaufwärtigen Stirnwand des Schalldämpfergehäuses 20 bereitstellenden Gehäusedeckel einstückig ausgebildeten stromaufwärtigen Abscheideleitungsteil 48 oder im stromaufwärtigen Leitungsabschnitt 16 der Brennstoffzellen-Abgasleitung 12 eine Drallstrom-Erzeugungseinheit 68 angeordnet. Diese kann eine Mehrzahl von in Umfangsrichtung um die Strömungsmittenachse S aufeinander folgenden und bezüglich der Abgas-Hauptströmungsrichtung H angestellten, im Wesentlichen radial sich erstreckenden Strömungsablenkelementen 69 umfassen. Durch die Drallstrom-Erzeugungseinheit 68 wird in dem in der Abgas-Hauptströmungsrichtung H geleiteten Brennstoffzellen-Abgas B eine Drallströmung erzeugt. Aufgrund dieser Drallströmung und der darin entstehenden Fliehkräfte werden im Brennstoffzellen-Abgas B transportierte Flüssigkeitsanteile, beispielsweise Wassertröpfchen oder dergleichen, nach radial außen beaufschlagt und sich mit höherer Konzentration im radial äußeren Bereich des Brennstoffzellen-Abgasstroms ansammeln. Dieser radial äußere Teil des Brennstoffzellen-Abgasstroms kann zumindest teilweise durch die Flüssigkeitsabscheideöffnung 66 hindurch in die Flüssigkeitsabscheidekammer 40 abgeleitet werden, so dass in der Flüssigkeitsabscheidekammer 40 aus dem Brennstoffzellen-Abgasstrom extrahierte Flüssigkeit sich ansammeln kann.

In einem in einer Vertikalrichtung V bei in einem Fahrzeug montierter Brennstoffzellen-Abgasanlage 10 unteren Bereich des Schalldämpfergehäuses 20 ist eine Flüssigkeitssammelkammer 70 gebildet. Diese erstreckt sich vorzugsweise entlang der gesamten Länge des Schalldämpfergehäuses 20 vom stromaufwärtigen Endbereich 32 zum stromabwärtigen Endbereich 34 desselben und ist durch einen Gehäuseboden 72 von den beiden Schalldämpferkammern 36, 38 und auch der Flüssigkeitsabscheidekammer 40 getrennt. In Zuordnung zu jeder dieser Kammern ist in dem Gehäuseboden 72 jeweils wenigstens eine Flüssigkeitsdurchtrittsöffnung 74, 76 bzw. 78 ausgebildet. In jeder der Schalldämpferkammern 36, 38 bzw. auch der Flüssigkeitsabscheidekammer 40 sich ansammelnde Flüssigkeit kann durch die zugeordneten Flüssigkeitsdurchtrittsöffnungen 74, 76, 78 in die Flüssigkeitssammelkammer 40 gelangen und sich dort ansammeln.

In Zuordnung zu der Flüssigkeitssammelkammer 70 ist zumindest eine Flüssigkeitsableitöffnung 80 mit einem Flüssigkeitsabgabeventil 82 vorgesehen. Man erkennt in den Fig. 1 bis 6, dass bei in ein Fahrzeug eingebauter Brennstoffzellen-Abgasanlage das Schalldämpfergehäuse 20 in der Abgas-Hauptströmungsrichtung H nach unten geneigt ist, so dass derjenige Bereich der Flüssigkeitssammelkammer 70, in welchem die Flüssigkeitsableitöffnung 80 positioniert ist, im Wesentlichen den in der Vertikalrichtung V tiefsten Bereich der Flüssigkeitssammelkammer 70 bildet. Dies bedeutet, dass in der Flüssigkeitssammelkammer 70 enthaltene Flüssigkeit sich grundsätzlich im Bereich der Flüssigkeitsableitöffnung 80 bzw. des Flüssigkeitsabgabeventils 82 ansammelt, so dass, wenn das Flüssigkeitsabgabeventil 82 geöffnet ist, Flüssigkeit unter Schwerkrafteinwirkung aus der Flüssigkeitssammelkammer 70 ausströmt und beispielsweise in den Brennstoffzellenprozess zurückgespeist oder in flüssiger Form zur Umgebung abgegeben werden kann.

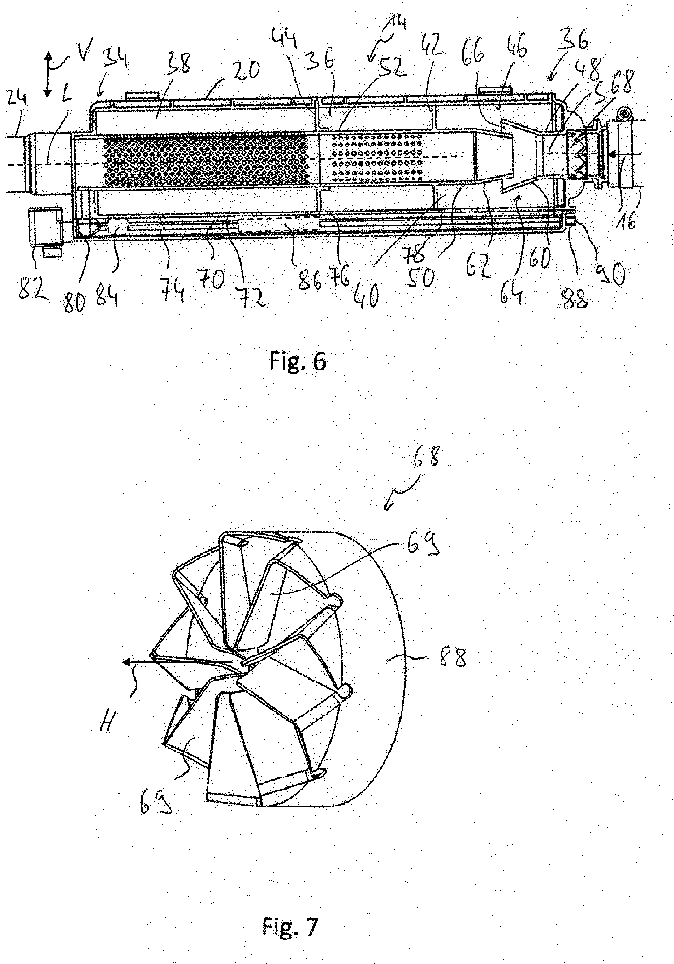

In Zuordnung zu der Flüssigkeitssammelkammer 70 kann ein in Fig. 6 prinzipartig dargestellter Flüssigkeitspegelsensor 84 vorgesehen sein, dessen Ausgangssignal anzeigt, welche Menge an Flüssigkeit sich in der Flüssigkeitssammelkammer 70 angesammelt hat. Ist diese Menge ausreichend groß, um die Flüssigkeit, also Wasser, im Brennstoffzellenbetrieb nutzen zu können, kann das Flüssigkeitsabgabeventil 82 geöffnet werden. Auch dann, wenn ein Schwellenpegel überschritten ist und die Gefahr besteht, dass Flüssigkeit zumindest aus dem am tiefsten liegenden Bereich der stromabwärtigen Schalldämpferkammer 38 nicht mehr in die Flüssigkeitssammelkammer 70 abströmen kann, kann das Flüssigkeitsableitventil 82 geöffnet werden, um Flüssigkeit aus der Flüssigkeitssammelkammer 70 abzugeben.

Ferner kann der Flüssigkeitssammelkammer 70 eine in Fig. 6 prinzipartig dargestellte Heizeinheit 86 zugeordnet sein. Diese kann durch elektrische Erregung die in der Flüssigkeitssammelkammer 70 sich ansammelnde Flüssigkeit erwärmen und somit ein Einfrieren derselben verhindern bzw. bereits die gefrorene Flüssigkeit wieder auftauen. Dies gewährleistet, dass jederzeit und insbesondere auch bei vergleichsweise niedriger Umgebungstemperatur Flüssigkeit aus der Flüssigkeitssammelkammer 70 abgegeben und beispielsweise im Brennstoffzellenbetrieb wieder genutzt werden kann.

Ferner kann in Zuordnung zu der Flüssigkeitssammelkammer 70 zumindest eine durch einen Wasserstoffabgabestutzen 88 bereitgestellte Wasserstoffabgabeöffnung 90 vorgesehen sein. Diese Wasserstoffabgabeöffnung 90 kann so positioniert sein, dass sie in der Vertikalrichtung V höher liegt als der höchstliegende Bereich der Flüssigkeitssammelkammer 70. Im Brennstoffzellenbetrieb bzw. beim Spülen des Anodenbereichs in die Brennstoffzellen-Abgasanlage 10 eingeleiteter Wasserstoff kann somit dann, wenn dieser über die Flüssigkeitsdurchtrittsöffnungen 74, 76, 78 in die Flüssigkeitssammelkammer 70 gelangt, sich im höchstgelegenen Bereich der Flüssigkeitssammelkammer 70 ansammeln, in welchem die Flüssigkeitssammelkammer 70 über die Wasserstoffabgabeöffnung 90 zur Umgebung offen ist. Somit kann in die Flüssigkeitssammelkammer 70 gelangender Wasserstoff, ohne dass die Gefahr besteht, dass eine kritische Wasserstoffkonzentration in der Flüssigkeitssammelkammer 70 gebildet wird, im Wesentlichen permanent zur Umgebung abgegeben werden.

Die Fig. 7-9 zeigen detaillierter ein Ausgestaltungsbeispiel der bei der Brennstoffzellen-Abgasanlage 10 einsetzbaren Drallstrom-Erzeugungseinheit 68. Diese kann beispielsweise einstückig aus einem Blechmaterial gebogen sein und umfasst einen ringartigen bzw. im Wesentlichen zylindrischen Körper 88, mit welchem die Drallstrom-Erzeugungseinheit 68 beispielsweise an dem stromaufwärtigen Abscheideleitungsteil 48 gehalten sein kann. Von dem Körper 68 erstrecken sich die schaufelartig ausgebildeten und in Umfangsrichtung aufeinanderfolgend angeordneten Strömungsablenkelemente 69 nach radial innen, so dass diese beispielsweise mit ihren radial inneren Endbereichen sich in Umfangsrichtung teilweise überlappen. Die Strömungsablenkelemente 69 sind bezüglich der Abgas-Hauptströmungsrichtung H angestellt, also unter einem von 90° unterschiedlichen Winkel geneigt, so dass das in der Abgas-Hauptströmungsrichtung H auf die Drallstrom-Erzeugungseinheit 68 zu strömende Brennstoffzellen-Abgas B an den Strömungsablenkelementen 69 in Umfangsrichtung bezüglich der Strömungsmittenachse S abgelenkt wird und eine Drallströmung erzeugt wird.

Bei einer alternativen Ausgestaltung kann die Drallstrom-Erzeugungseinheit 68 als Kunststoffteil ausgebildet sein. Dies führt zu einem leichten, kostengünstig herzustellenden und korrosionsresistenten Ausbau und ermöglicht überdies den Aufbau der Drallstrom-Erzeugungseinheit 68 mit großer Gestaltungsfreiheit.

Es ist darauf hinzuweisen, dass auch andere Systembereiche oder Komponenten der Brennstoffzellen-Abgasanlage 10, wie zum Beispiel die Brennstoffzellen-Abgasleitung 12 und die Schalldämpfereinheit 14, im Wesentlichen vollständig mit Kunststoffmaterial aufgebaut sein können. Dies trägt zu einem leichten, kostengünstig herzustellenden und insbesondere bezüglich des im Brennstoffzellen-Abgas B enthaltenen Wassers korrosionsfesten Aufbau der Brennstoffzellen-Abgasanlage 10.

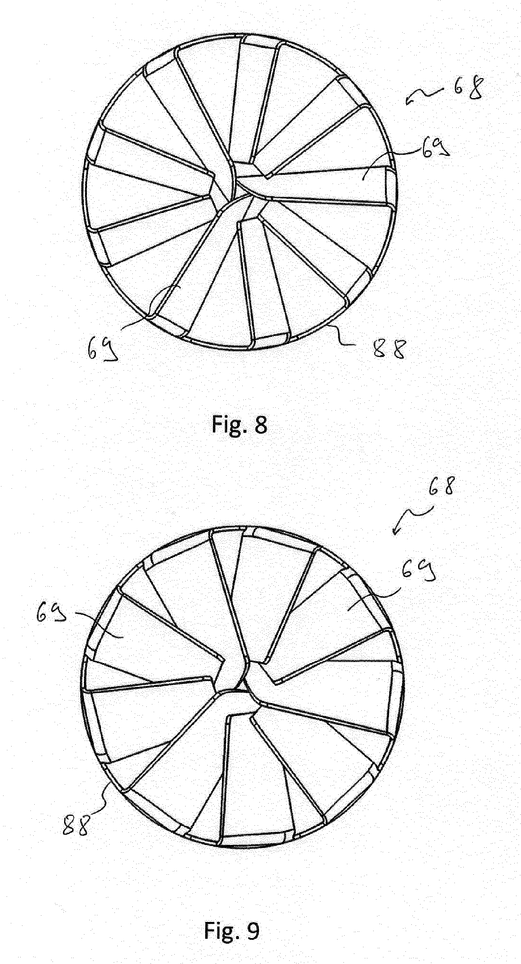

Das Ausmaß der Ablenkung in Umfangsrichtung und damit das Ausmaß der erzeugten Drallströmung, gleichzeitig aber auch das Ausmaß der durch die Strömungsablenkelemente 69 erzeugten Strömungsverdämmung hängt vom Anstellwinkel der Strömungsablenkelemente 69 bezüglich der Abgas-Hauptströmungsrichtung H ab. Bei dem in Fig. 7 und 8 dargestellten Ausgestaltungsbeispiel sind die Strömungsablenkelemente 69 vergleichsweise wenig angewinkelt, also mehr in Richtung der Abgas-Hauptströmungsrichtung H orientiert, so dass eine weniger starke Ablenkung des Brennstoffzellen-Abgasstroms in Umfangsrichtung erzeugt wird. Die Fig. 9 zeigt eine Ausgestaltung der Drallstrom-Erzeugungseinheit 68, bei welcher die in Umfangsrichtung auch weiter ausgedehnten Strömungsablenkelemente 69 bezüglich der Abgas-Hauptströmungsrichtung stärker angestellt sind. Mit dem in Fig. 9 dargestellten Aufbau der Drallstrom-Erzeugungseinheit 68 wird der Brennstoffzellen-Abgasstrom in Umfangsrichtung stärker abgelenkt, was zu einer erhöhten auf im Brennstoffzellen-Abgas enthaltene Flüssigkeitspartikel einwirkenden Fliehkraft beiträgt.

Die erfindungsgemäße Brennstoffzellen-Abgasanlage vereinigt für deren Betrieb bzw. für den Betrieb eines Brennstoffzellensystems in einem Fahrzeug vorteilhafte bzw. relevante Funktionen. Einerseits wird durch die Schalldämpfungsfunktion der Schalldämpfereinheit dafür gesorgt, dass beispielsweise durch die das Prozessgas durch die Brennstoffzelle leitenden Kompressoren entstehende Geräusche auf dem Strömungsweg des Brennstoffzellen-Abgases reduziert oder nahezu vollständig eliminiert werden. Andererseits besteht die Möglichkeit, im Brennstoffzellen-Abgas mitgeführte Flüssigkeit, insbesondere also Wasser, aus dem Brennstoffzellen-Abgas zu extrahieren, so dass dieses nicht in die Umgebung ausgestoßen wird, sondern bei Bedarf in den Arbeitszyklus eines Brennstoffzellensystems rückgespeist werden kann. Aus dem Brennstoffzellen-Abgas abgeschiedenes Wasser, welches im Brennstoffzellen-Prozess nicht genutzt werden kann, kann in flüssiger Form zur Umgebung abgegeben werden. Das Entstehen einer kritischen Wasserstoffkonzentration insbesondere im Bereich der Schalldämpfereinheit wird durch die permanent bestehende Möglichkeit, Wasserstoff zur Umgebung hin abzugeben, vermieden. Zu dieser Funktionalität trägt insbesondere auch bei, dass das Brennstoffzellen-Abgas die Schalldämpfereinheit im Wesentlichen geradlinig durchströmen kann. Starke Abwinkelungen von das Brennstoffzellen-Abgas führenden Rohrabschnitten insbesondere im Inneren der Schalldämpfereinheit und dadurch eingeführte Strömungsumlenkungen sind vermieden. Da Wasser bzw. Wasserdampf und Wasserstoff im Betrieb eines Brennstoffzellensystems aus dem Brennstoffzellen-Abgas abgeleitet und erforderlichenfalls auch in den Brennstoffzellenprozess rückgespeist werden können, wird eine Beaufschlagung der Umgebung eines Fahrzeugs mit derartigen Stoffen weitestgehend vermieden. Weiter ist zu betonen, dass eine derartige Brennstoffzellen-Abgasanlage auch bei beispielsweise stationär betriebenen Brennstoffzellensystemen sowie bei beispielsweise in Schiffen oder dergleichen betriebenen Brennstoffzellensystemen Anwendung finden kann.

## Patentansprüche

1. Brennstoffzellen-Abgasanlage für ein Brennstoffzellensystem, insbesondere in einem Fahrzeug, umfassend eine von Brennstoffzellen-Abgas (B) durchströmbare Brennstoffzellen-Abgasleitung (12) und eine von dem Brennstoffzellen-Abgas (B) durchströmbare Schalldämpfereinheit (14), wobei die Schalldämpfereinheit (14) umfasst:
- ein Schalldämpfergehäuse (20) mit einem Brennstoffzellen-Abgaseintrittsbereich (18) und einem Brennstoffzellen-Abgasaustrittsbereich (22), wobei ein stromaufwärtiger Leitungsabschnitt (16) der Brennstoffzellen-Abgasleitung (12) an den Brennstoffzellen-Abgaseintrittsbereich (18) anschließt und ein stromabwärtiger Leitungsabschnitt (24) der Brennstoffzellen-Abgasleitung (12) an den Brennstoffzellen-Abgasaustrittsbereich (22) anschließt,
- wenigstens eine in dem Schalldämpfergehäuse (30) gebildete Schalldämpferkammer (36, 38),
- wenigstens eine durch einen Gehäuseboden (72) des Schalldämpfergehäuses (20) von wenigstens einer Schalldämpferkammer (36, 38) getrennte Flüssigkeitssammelkammer (70), wobei in dem Gehäuseboden (72) wenigstens eine wenigstens eine Schalldämpferkammer (36, 38) mit wenigstens einer Flüssigkeitssammelkammer (70) zum Flüssigkeitsaustausch verbindende Flüssigkeitsdurchtrittsöffnung (74, 76) vorgesehen ist, und wobei an dem Schalldämpfergehäuse (20) wenigstens eine Flüssigkeitsableitöffnung (80) zum Ableiten von Flüssigkeit aus der wenigstens einen Flüssigkeitssammelkammer (70) vorgesehen ist.

2. Brennstoffzellen-Abgasanlage nach Anspruch 1, **dadurch gekennzeichnet, dass** in dem Schalldämpfergehäuse (20) eine Mehrzahl von jeweils durch eine Trennwand (44) voneinander getrennten Schalldämpferkammern (36, 38) ausgebildet ist, und dass jede Schalldämpferkammer (36, 38) durch den Gehäuseboden (72) von der wenigstens einen Flüssigkeitssammelkammer (70) getrennt ist.

3. Brennstoffzellen-Abgasanlage nach Anspruch 2, **dadurch gekennzeichnet, dass** in dem Gehäuseboden (72) in Zuordnung zu jeder Schalldämpferkammer (36, 38) wenigstens eine Flüssigkeitsdurchtrittsöffnung (74, 76) vorgesehen ist.

4. Brennstoffzellen-Abgasanlage nach einem der Ansprüche 1-3, **dadurch gekennzeichnet, dass** in dem Schalldämpfergehäuse (20) wenigstens ein in wenigstens einer Schalldämpferkammer (36, 38) sich erstreckendes Brennstoffzellen-Abgasrohr (52) vorgesehen ist, wobei wenigstens ein Brennstoffzellen-Abgasrohr (52) zu wenigstens einer Schalldämpferkammer (36, 38) über wenigstens eine, vorzugsweise eine Mehrzahl von Öffnungen (56, 58) offen ist.

5. Brennstoffzellen-Abgasanlage nach einem der Ansprüche 1-4, **dadurch gekennzeichnet, dass** das Schalldämpfergehäuse (20) in Richtung einer Schalldämpfergehäuse-Längsachse (L) langgestreckt ist, wobei der Brennstoffzellen-Abgaseintrittsbereich (18) in einem stromaufwärtigen axialen Endbereich (32) des Schalldämpfergehäuses (20) ausgebildet ist und der Brennstoffzellen-Abgasaustrittsbereich (22) in einem stromabwärtigen axialen Endbereich (34) des Schalldämpfergehäuses (20) ausgebildet ist.

6. Brennstoffzellen-Abgasanlage nach einem der Ansprüche 1-5, **dadurch gekennzeichnet, dass** der Brennstoffzellen-Abgaseintrittsbereich (18) zu einer stromaufwärtigen Schalldämpferkammer (36) offen ist und der Brennstoffzellen-Abgasaustrittsbereich (22) zu einer stromabwärtigen Schalldämpferkammer (38) offen ist, wobei die stromaufwärtige Schalldämpferkammer (36) durch wenigstens eine Trennwand (44) oder/und wenigstens eine weitere Schalldämpferkammer von der stromabwärtigen Schalldämpferkammer (38) getrennt ist.

7. Brennstoffzellen-Abgasanlage nach einem der Ansprüche 1-6, **dadurch gekennzeichnet, dass** in dem Schalldämpfergehäuse (20) eine Flüssigkeitsabscheidekammer (40) ausgebildet ist, wobei der stromaufwärtige Leitungsabschnitt (16) der Brennstoffzellen-Abgasleitung (12) zu der Flüssigkeitsabscheidekammer (40) offen ist und die Flüssigkeitsabscheidekammer (40) durch eine Trennwand (42) von einer Schalldämpferkammer (36) getrennt ist, und dass die Flüssigkeitsabscheidekammer (40) durch den Gehäuseboden (72) von der wenigstens einen Flüssigkeitssammelkammer (70) getrennt ist, wobei in dem Gehäuseboden (72) wenigstens eine die Flüssigkeitsabscheidekammer (40) mit wenigstens einer Flüssigkeitssammelkammer (70) zum Flüssigkeitsaustausch verbindende Flüssigkeitsdurchtrittsöffnung (78) vorgesehen ist.

8. Brennstoffzellen-Abgasanlage nach Anspruch 7, **dadurch gekennzeichnet, dass** ein in der Flüssigkeitsabscheidekammer (40) sich erstreckender Abscheideleitungsabschnitt (46) mit einem stromaufwärtigen Abscheideleitungsteil (48) im Brennstoffzellen-Abgaseintrittsbereich (18) an den stromaufwärtigen Leitungsabschnitt (16) der Brennstoffzellen-Abgasleitung (12) anschließt und mit einem stromabwärtigen Abscheideleitungsteil (50) die die Flüssigkeitsabscheidekammer (40) von einer Schalldämpferkammer (36) trennende Trennwand (42) durchsetzt oder/und zu wenigstens einer Schalldämpferkammer (36, 38) offen ist, und dass im Angrenzungsbereich des stromabwärtigen Abscheideleitungsteils (50) an den stromaufwärtigen Abscheideleitungsteil (48) ein Öffnungsbereich (64) mit einer zu der Flüssigkeitsabscheidekammer (40) offenen, vorzugsweise im Wesentlichen ringartigen Flüssigkeitsabscheideöffnung (66) ausgebildet ist.

9. Brennstoffzellen-Abgasanlage nach Anspruch 8, **dadurch gekennzeichnet, dass** im Öffnungsbereich (64) ein stromaufwärtiger Endabschnitt (62) des stromabwärtigen Abscheideleitungsteils (50) in einen stromabwärtigen Endabschnitt (60) des stromaufwärtigen Abscheideleitungsteils (48) derart eingreifend positioniert ist, dass zwischen dem stromaufwärtigen Endabschnitt (62) des stromabwärtigen Abscheideleitungsteils (50) und dem stromabwärtigen Endabschnitt (60) des stromaufwärtigen Abscheideleitungsteils (48) die Flüssigkeitsabscheideöffnung (66) gebildet ist.

10. Brennstoffzellen-Abgasanlage nach Anspruch 9, **dadurch gekennzeichnet, dass** der stromabwärtige Endabschnitt (60) des stromaufwärtigen Abscheideleitungsteils (48) in einer Abgas-Hauptströmungsrichtung (H) sich vorzugsweise im Wesentlichen konisch erweiternd ausgebildet ist, oder/und dass der stromaufwärtige Endabschnitt (62) des stromabwärtigen Abscheideleitungsteils (50) in der Abgas-Hauptströmungsrichtung (H) sich vorzugsweise im Wesentlichen konisch erweiternd ausgebildet ist.

11. Brennstoffzellen-Abgasanlage nach einem der Ansprüche 8-10, **dadurch gekennzeichnet, dass** stromaufwärts der Flüssigkeitsabscheideöffnung (66) eine Drallstrom-Erzeugungseinheit (68) vorgesehen ist.

12. Brennstoffzellen-Abgasanlage nach Anspruch 11, **dadurch gekennzeichnet, dass** die Drallstrom-Erzeugungseinheit (68) eine Mehrzahl von bezüglich einer Strömungsmittenachse (S) in Umfangsrichtung aufeinanderfolgenden, bezüglich der Abgas-Hauptströmungsrichtung angestellten Strömungsablenkelementen (69) umfasst.

13. Brennstoffzellen-Abgasanlage nach einem der Ansprüche 1-12, **dadurch gekennzeichnet, dass** in Zuordnung zu der wenigstens einen Flüssigkeitssammelkammer (70) vorgesehen ist:
- ein Flüssigkeitsabgabeventil (82) zum wahlweisen Freigegeben und Abschließen der wenigstens einen Flüssigkeitsableitöffnung (80),
oder/und
- ein Flüssigkeitspegelsensor (84) zum Bereitstellen von Information über den Flüssigkeitspegel in der wenigstens einen Flüssigkeitssammelkammer (70),
oder/und
- eine Heizeinheit (86) zum Erwärmen von in der wenigstens einen Flüssigkeitssammelkammer (70) angesammelter Flüssigkeit,
- oder/und
- wenigstens eine Wasserstoffabgabeöffnung (90) zur Abgabe von Wasserstoff aus der wenigstens einen Flüssigkeitssammelkammer (70).

14. Brennstoffzellen-Abgasanlage nach einem der Ansprüche 1-13, **dadurch gekennzeichnet, dass** im stromabwärtigen Leitungsabschnitt (24) der Brennstoffzellen-Abgasleitung (12) ein Wasserstoffsensor (30) zum Bereitstellen von Information über den Wasserstoffgehalt in dem Brennstoffzellen-Abgas (B) vorgesehen ist.

15. Brennstoffzellen-Abgasanlage nach einem der Ansprüche 1-14, **dadurch gekennzeichnet, dass** im stromaufwärtigen Leitungsabschnitt (16) ein Gasstrom-Regulierventil (28) angeordnet ist, oder/und dass im stromaufwärtigen Leitungsabschnitt (16) der Brennstoffzellen-Abgasleitung (12) eine Kondensatoreinheit (31) angeordnet ist.
